# EUROPÄISCHE PATENTSCHRIFT

(11) **EP 2 240 950 B1**
(45) Veröffentlichungstag und Bekanntmachung des Hinweises auf die Patenterteilung: **22.11.2017**
(21) Anmeldenummer: 09700699.3
(22) Anmeldetag: 05.01.2009
(51) Int. Cl.: H01H 35/00, H01H 13/703, B60R 21/0136

(54) **DRUCKSENSIBLER FOLIENSENSOR, INSBESONDERE ZUR ANBRINGUNG AN DER OBERFLÄCHE EINES AUTONOM ARBEITENDEN MOBILTEILS**
PRESSURE-SENSITIVE FILM SENSOR, TO BE MOUNTED ESPECIALLY ON THE SURFACE OF AN AUTONOMOUSLY OPERATING MOBILE PART
CAPTEUR À FILMS SENSIBLE À LA PRESSION, DESTINÉ EN PARTICULIER À ÊTRE APPLIQUÉ SUR LA SURFACE D'UN ÉLÉMENT MOBILE À FONCTIONNEMENT AUTONOME

(30) Priorität: 10.01.2008 DE 102008003796
(43) Veröffentlichungstag der Anmeldung: 20.10.2010
(73) Patentinhaber: BSH Hausgeräte GmbH, 81739 München (DE)
(72) Erfinder: DAMRATH, Joachim, 26721 Emden (DE); SPIELMANNLEITNER, Markus, 73479 Ellwangen (DE); WETZL, Gerhard, 89567 Sontheim (DE)
(86) Internationale Anmeldenummer: PCT/EP2009/050024
(87) Internationale Veröffentlichungsnummer: WO 2009/087124

(56) Entgegenhaltungen:
- EP-A1- 1 667 183
- EP-A1- 1 739 698
- FR-A1- 2 512 407
- US-A- 4 801 771
- US-A- 5 962 118

## Beschreibung

Die Erfindung betrifft einen drucksensiblen Foliensensor, insbesondere zur Anbringung an der Oberfläche eines autonom arbeitenden Mobilteils wie eines Bodenreinigungsgeräts oder dergleichen, zur Erkennung von Hindernissen.

Autonom arbeitende Mobilteile, insbesondere Reinigungsgeräte sollen, um ein optimales Arbeitsergebnis zu erreichen, möglichst randnah an Hindernisse heranfahren und an diesen entlang fahren können. Um dies zu erreichen, sind entsprechend geeignete Sensoren erforderlich.

In der WO 02/071175 A1 wird hierzu ein Bodenreinigungsgerät beschrieben, das mit einer schwimmend gelagerten Haube versehen ist, die durch das Auftreffen auf ein Hindernis verschoben wird, so dass diese Verschiebung sensorisch detektiert werden kann.

Die US 4,951,985 A1 beschreibt einen so genannten "Bumper" für eine ortsabhängige Stoßerkennung, der aus einem elektrisch leitenden Bauteil mit einem komprimierbaren elektrisch leitenden Material versehen ist.

Weiter offenbart die EP 1 739 698 A1 einen Drucksensor, der insbesondere an einer PKW-Haube angebracht wird, um die Sicherheit eines Passanten im Falle einer Kollision zu erhöhen.

Der Erfindung liegt die Aufgabe zugrunde, einen Foliensensor der eingangs genannten Art zur Hinderniserkennung zu schaffen, durch den das Gehäuse eines autonom arbeitenden Mobilteils taktil ausgerüstet wird. Durch die Hinderniserkennung soll feststellbar sein, in welchem Bereich des Gehäuses ungefähr eine Berührung mit einem Hindernis statt gefunden hat, so dass sowohl die Randbereiche des Gehäuses wie auch die Ecken taktil auszurüsten sind. Weiter soll ein Unterfahrschutz gewährleistet sein, also ausgeschlossen werden, dass das Mobilteil beispielsweise unter Möbeln festfahren kann. Schließlich soll bei einem Auftreffen auf ein Hindernis eine ausreichende Dämpfung erreicht werden, so dass weder das Hindernis noch die taktile Hinderniserkennung beschädigt werden.

Ein diese Aufgabe lösender drucksensibler Foliensensor, insbesondere zur Anbringung an der Oberfläche eines autonom arbeitenden Mobilteils, ist gekennzeichnet durch zwei gegenseitig auf Abstand gehaltene, elektrisch leitende Folien, die unter Druck zur gegenseitigen Anlage gebracht werden können und damit eine elektrische Schaltfunktion auslösen, wodurch das Auftreffen an einem Hindernis signalisiert und von einer Auswerteschaltung weiter verarbeitet werden kann.

Der durch die Erfindung erreichte Vorteil besteht im Wesentlichen darin, dass die Außenfläche des Mobilteils mit diesem Foliensensor versehen werden kann, wodurch - unabhängig von der jeweiligen Position - signalisiert wird, sobald das Mobilteil mit einem Hindernis in Berührung kommt. Vorteilhaft ist dabei weiter, dass dieser Foliensensor ein geringes Gewicht aufweist, so dass hierdurch kein ungünstiger Einfluss insbesondere auf die Beweglichkeit des Mobilteils zu erwarten ist.

In bevorzugter Ausführungsform der Erfindung sind zwischen den Folien lokal angeordnete Abstandshalter vorgesehen, deren den Folienabstand bestimmende Höhe, gegenseitiger Abstand und Fläche sowie Randkontur der geforderten Ansprechempfindlichkeit angepasst ist. So führen höhere Abstandshalter sowie deren geringere Abstände zu einer verringerten Sensibilität, während durch gegenläufige Maßnahmen die Empfindlichkeit erhöht werden kann. Dabei besteht im Rahmen der Erfindung weiter die Möglichkeit, dass durch geeignete Anordnung der Abstandshalter Schaltflächen unterschiedlicher Größe gebildet werden können, so dass hierdurch auch die Formgebung der Mobilteile, die Einfluss auf die entstehenden Kräfte beim Auftreffen auf ein Hindernis haben, berücksichtigt werden können.

In diesem Zusammenhang ist es im Rahmen der Erfindung weiter von Bedeutung, dass die Folien zur Anbringung an verrundeten Kanten bogenförmig ausgebildet sind, wobei die Folien zur Wahrung des erforderlichen gegenseitigen Abstandes entweder in einzelnen Schichten auf die Oberfläche des Mobilteils aufkaschiert sind oder mit ausreichend hohen und benachbart angeordneten Abstandshaltern versehen oder entsprechend der zu bekleidenden Verrundung vorgeformt oder geprägt sind. Im Ergebnis erlauben daher derartige Schaltfolien eine sehr universelle Anpassung an die jeweilige räumliche Gestaltung des Mobilteils.

Weiter besteht im Rahmen der Erfindung die Möglichkeit, dass der Foliensensor derart an der Oberfläche des Mobilteils angeordnet ist, dass er zumindest im Bereich eines Randstreifens bei Krafteinwirkung unter Kontaktgabe biegbar ist. Hierdurch wird sicher gestellt, dass auch im Randbereich, in dem der Foliensensor wegen der erforderlichen Verklebung nicht oder nur unzureichend empfindlich ist, eine ausreichende Sensibilität gegeben ist. Dabei können im Bereich des Randstreifens Mittel zur Rückstellung in die Ausgangslage vorgesehen sein. Hierfür empfiehlt es sich, dass die Mittel zur Rückstellung der Schaltfolie von Dämpfungsmaterial gebildet sind. Weiter bietet es sich hierdurch an, dass zur Bildung eines Unterfahrschutzes das Dämpfungsmaterial zumindest teilweise oben über das Gehäuse des Mobilteils übersteht.

Für den Bereich von Ecken bzw. Kanten besteht jedoch alternativ auch die Möglichkeit, dass der Foliensensor in seinem Randbereich mit einer Schaltwippe versehen ist, die eine am Rand des Foliensensors auftretende Kraftwirkung in einen von dem Rand beabstandeten Bereich überträgt. Dazu kann die Schaltwippe gelenkig gelagert und zwischen der Schaltwippe und der Schaltfolie ein im taktilen Bereich vorgesehenes Distanzstück angeordnet sein. In besonders einfacher Ausgestaltung der Erfindung ist dabei das Distanzstück fest an der Schaltwippe angeordnet.

Um diesen Bereich in besonders einfacher Weise möglichst umfassend überwachen zu können, bevorzugt die Erfindung weiterhin, dass die Schaltwippe als winkelförmige, die Kante oder Ecke des Mobilteils umgreifende Kappe ausgebildet ist, wobei beide Schenkel des Winkels mit einem Distanzstück versehen sind.

Es besteht auch die ebenfalls bevorzugte Möglichkeit, dass die Folien mit einer potentiometrisch wirkenden Oberfläche ausgestattet sind und bei Kontaktgabe der zwischen den Folien auftretende elektrische Widerstand ermittelt wird.

Um zu vermeiden, dass die Folien bei einem Feuchtigkeitseintritt durch eine so genannte Silbermigration zwischen den Trägerfolienhälften unbrauchbar werden, ist es zweckmäßig, wenn ihre Ränder sowie die Anschlussleitungen gegen Feuchtigkeitseintritt abgedichtet sind. Diese Abdichtung kann in besonders einfacher Weise durch eine ausreichend breite Verklebung erfolgen. Alternativ kann jedoch auch das Dämpfungsmaterial den Rand der Schaltfolie umschließen. Dabei besteht weiter die Möglichkeit, dass das Dämpfungsmaterial gegen das Gehäuse des Mobilteils verklebt ist.

Eine weitere vorteilhafte Möglichkeit zur Abdichtung des Randes der Schaltfolien besteht darin, dass die Schaltfolie gemeinsam mit dem Gehäuse umschäumt ist.

Die Schaltfolie kann in besonders einfacher Ausgestaltung unmittelbar auf das Gehäuse des Mobilteils aufgeklebt sein; sie kann jedoch auch in Schichten aufkaschiert sein, was sich insbesondere dann empfiehlt, wenn die Oberfläche des Mobilteils nicht eben ausgebildet ist.

Insbesondere empfiehlt es sich, wie bereits angesprochen, dass der Foliensensor auf seiner dem Gehäuse abgewandten Seite mit Dämpfungsmaterial belegt ist. Dieses Dämpfungsmaterial kann von einem PU-Schaumstoff oder auch gummiartigen Material gebildet sein.
Hierbei ist zu beachten, dass die Dicke des Dämpfungsmaterials der geforderten taktilen Empfindlichkeit des Foliensensors entsprechend gewählt ist. Darüber hinaus muss auch die Elastizität bzw. Härte des Dämpfungsmaterials der geforderten taktilen Empfindlichkeit des Foliensensors entsprechend gewählt werden.

Schließlich spielt auch die Folienstärke eine Rolle; sie sollte der geforderten taktilen Empfindlichkeit des Foliensensors entsprechend ausgewählt sein.

Die Außenfläche des Dämpfungsmaterials kann zweckmäßigerweise mit einer gleitfähigen Beschichtung versehen sein, um im Falle der Berührung mit einem Hindernis keine bremsende Wirkung zu verursachen. Dabei kann die gleitfähige Beschichtung von einer dünnen Lage textilen Gewebes oder einer lackartigen Oberflächenschicht gebildet sein.

Im Folgenden werden Ausführungsbeispiele der Erfindung anhand der Zeichnung näher erläutert; es zeigen:
Figur 1 den prinzipiellen Aufbau bei Anbringung eines Foliensensors an einem Gehäuse,
Figur 2 die Anordnung des Foliensensors im Eckbereich eines links schematisch wiedergegebenen Gehäuses,
Figur 3 den Foliensensor mit einem über das Gehäuse überstehenden Randbereich, wobei links zwei Darstellungen den Foliensensor im Ruhezustand bzw. im abgeknichten Zustand zeigen,
Figur 4 drei Ausführungsformen zur Anwendung einer Schaltwippe im Randbereich des Foliensensors,
Figur 5 eine alternative Ausführungsform zu der Darstellung in Figur 4 in einer Drauf- und einer Seitenansicht, wobei links eine Ausführungsvariante dazu gezeigt ist,
Figur 6 ein weiteres Ausführungsbeispiel für ein links schematisch angedeutetes Gehäuse.

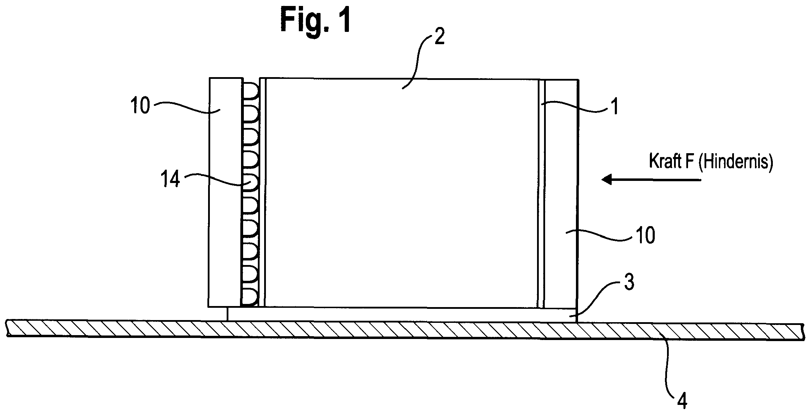

Der in der Zeichnung dargestellte drucksensible Foliensensor 1 ist insbesondere zur Anbringung an der Oberfläche von autonom arbeitenden Mobilteilen 2 vorgesehen, insbesondere also beispielsweise Bodenreinigungsgeräten, die für ihre autonome Arbeitsweise mit einer Hinderniserkennung ausgestattet sein müssen. Die Figur 1 zeigt ein solches Bodenreinigungsgerät mit einem an der Unterseite angeordneten Wischbezug 3 zur Reinigung eines Bodenbelags 4.

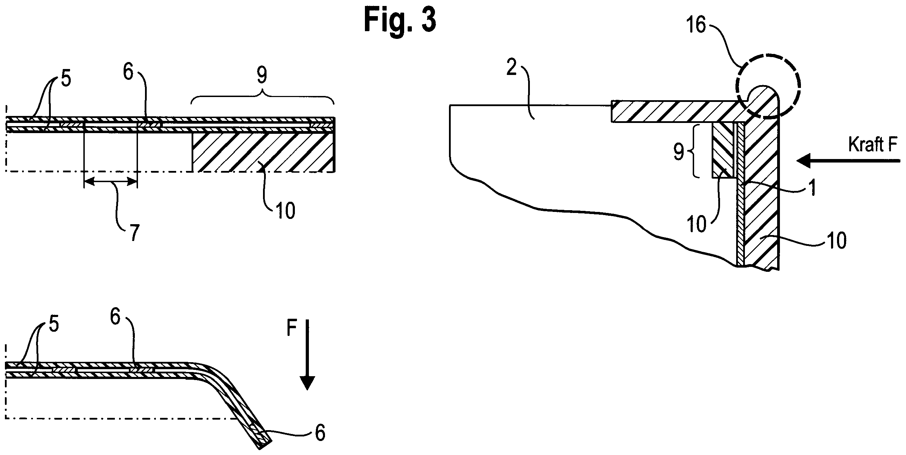

Dazu ist der Foliensensor 1 gemäß Figur 3 aus zwei gegenseitig auf Abstand gehaltenen elektrisch leitenden Folien 5 gebildet, die unter Druck zur gegenseitigen Anlage gebracht werden können. Sobald die Folien 5 gegenseitig Kontakt machen, wird hierdurch eine elektrische Schaltfunktion ausgelöst, wodurch das Auftreffen an einem Hindernis signalisiert wird. Dies kann von einer Auswerteschaltung weiterverarbeitet und für die weitere Bewegungssteuerung des Mobilteils 2 ausgenutzt werden. Hierbei besteht unter Umständen sogar die Möglichkeit, den Kontaktwiderstand, der von dem Anpressdruck einerseits und der gedrückten Fläche andererseits abhängig ist, für die weitere Auswertung mit in Betracht zu ziehen.

Zwischen den Folien 5 sind lokal angeordnete Abstandshalter 6 vorgesehen, deren den Folienabstand bestimmende Höhe der geforderten Ansprechempfindlichkeit angepasst ist. Auch der gegenseitige Abstand der Abstandshalter 6, in Figur 3 mit 7 bezeichnet, sowie deren Fläche und Randkontur beeinflussen die Ansprechempfindlichkeit und sind entsprechend den Anforderungen zu wählen.

Hierbei ist insbesondere auch eine unregelmäßige Anordnung der Abstandshalter 6 möglich, so dass Schaltflächen unterschiedlicher Größe gebildet werden können. Hierdurch lassen sich mit einem Foliensensor 1 Bereiche unterschiedlicher Empfindlichkeit herstellen.

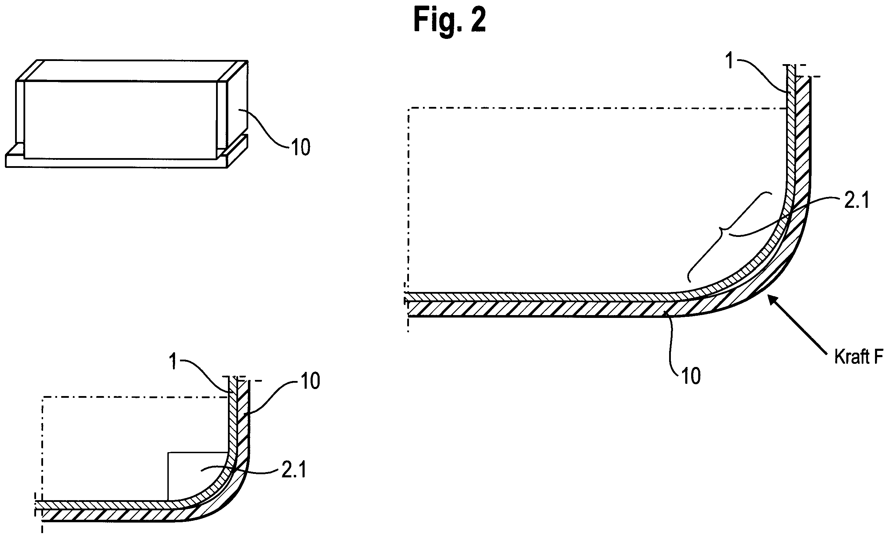

Um einen Foliensensor 1 auch an einer Ecke oder Kante anbringen zu können, kann dieser, wie in Figur 2 dargestellt, auch bogenförmig ausgebildet sein. Im Eckbereich kann dabei zur Erhöhung der Empfindlichkeit ein Hohlraum 2.1 vorhanden sein. Um dabei den erforderlichen gegenseitigen Abstand der einzelnen Folien 5 zu wahren, können die einzelnen Schichten entweder auf die Oberfläche des Mobilteils 2 aufkaschiert sein oder aber mit ausreichend hohen und benachbart angeordneten Abstandshaltern 6 versehen sein. Ebenso besteht natürlich die Möglichkeit, den Foliensensor 1 entsprechend der zu bekleidenden Verrundungen vorzuformen oder zu prägen.

Da der Foliensensor 1 im Randbereich wegen der dort erforderlichen Verklebung nicht druckempfindlich sind, kann er derart an der Oberfläche des Mobilteils 2 angeordnet sein, dass er zumindest im Bereich eines Randstreifens 9 bei Krafteinwirkung unter Kontaktgabe biegbar ist. Auf diese Weise ist die Kontaktgabe vom Rand des Foliensensors 1 weiter zum Innenbereich hin verlagert. Dazu ist es dann jedoch erforderlich, im Bereich des Randstreifens 9 Mittel zur Rückstellung des Foliensensors 1 in die Ausgangslage vorzusehen. Diese Rückstellmittel können, da dieses Material ohnehin Anwendung findet, von Dämpfungsmaterial 10 gebildet sein.

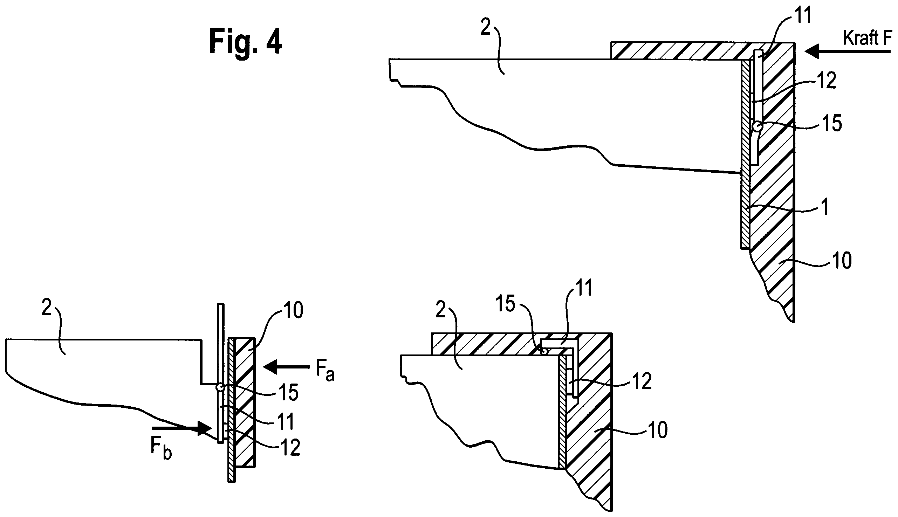

Auf diese Weise ist es auch möglich, einen Unterfahrschutz zu realisieren, der verhindert, dass das Mobilteil 2 beispielsweise unter ein Möbelstück gerät und dort verklemmt. Dazu ist der Foliensensor 1 bzw. das Dämpfungsmaterial 10 derart angeordnet, dass er bzw. es zumindest teilweise oben über das Gehäuse des Mobilteils 2 übersteht, wie dies in der rechten Darstellung von Fig. 3 in Form einer Noppe 16 oder der linken Darstellung von Fig. 4 angedeutet ist.

Alternativ besteht jedoch auch die Möglichkeit, dass der Foliensensor 1 in seinem Randbereich 9 mit einer Schaltwippe 11 versehen ist, die eine am Rand des Foliensensors auftretende Kraftwirkung in einen von ihrem Rand beabstandeten Bereich überträgt. Wie sich aus der Figur 4 ersehen lässt, ist die Schaltwippe 11 gelenkig bei 15 gelagert, wobei zwischen der Schaltwippe 11 und dem Foliensensor 1 ein im taktilen Bereich des Foliensensors 1 vorgesehenes Distanzstück 12 angeordnet ist. Dieses Distanzstück 12 kann fest an der Schaltwippe 11 angeordnet, insbesondere auch einstückig mit dieser ausgebildet sein.

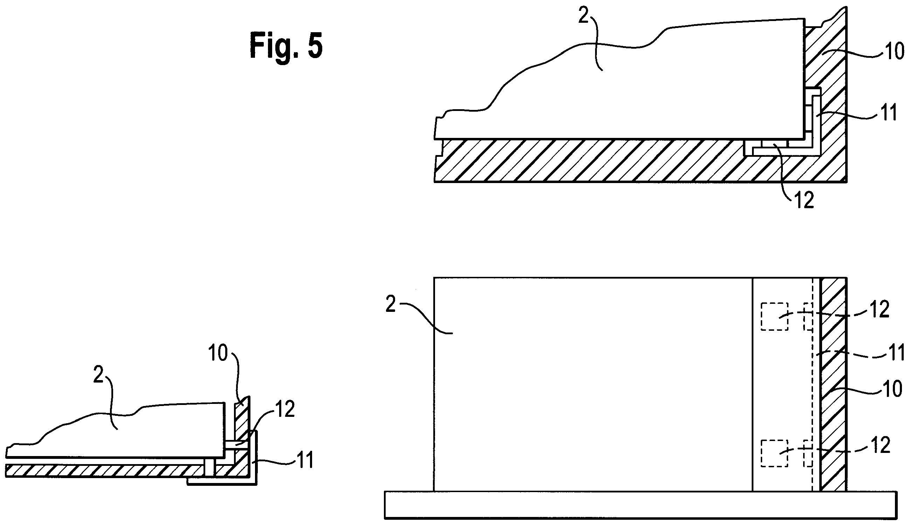

Die Schaltwippe 11 kann jedoch auch als winkelförmige, die Kante oder die Ecke des Mobilteils 2 umgreifende Kappe ausgebildet sein, wie dies aus der Figur 5 hervorgeht. Hierbei sind beide Schenkel des Winkels mit einem Distanzstück 12 versehen, so dass - abhängig von der Richtung der einwirkenden Kraft - der eine oder andere Foliensensor 1, ggf. auch beide, Kontakt gibt.

Die Folien 5 können auch mit einer potentiometrisch wirkenden Oberfläche ausgestattet sein, so dass dann bei Kontaktgabe der zwischen den Folien 5 auftretende elektrische Widerstand ermittelt wird und aus diesem Schlussfolgerungen über den Ort der Krafteinwirkung geschlossen werden.

Da der Foliensensor 1 üblicherweise aus elektrisch gut leitendem Material besteht, wofür insbesondere auch Silber in Betracht kommt, müssen die Ränder des Foliensensors 1, ebenso wie die dort angebrachten Anschlussbänder, vor Feuchtigkeitseintritt geschützt werden, da sonst eine so genannte Silbermigration zwischen den Trägerfolienhälften statt finden kann. Dies würde einen dauerhaften elektrischen Kontakt verursachen und somit den Foliensensor 1 unbrauchbar machen. Um diese Abdichtung zu erreichen, kann eine randseitig ausreichend breite Verklebung erfolgen. Abdichtend kann jedoch auch das auf dem Foliensensor 1 angebrachte Dämpfungsmaterial 10 wirken, soweit es den Rand des Foliensensors 1 umschließt. Dies gelingt insbesondere dann, wenn das Dämpfungsmaterial 10 gegen das Gehäuse des Mobilteils 2 verklebt ist. Dabei besteht schließlich auch die Möglichkeit, dass der auf das Gehäuse aufgeklebte Foliensensor 1 unmittelbar zusammen mit dem Gehäuse umschäumt ist. Wie sich aus Fig. 1 ergibt, kann das Dämpfungsmaterial 10 auf seiner der Schaltfolie anliegenden Seite mit Noppen 14 versehen sein.

Im Übrigen ist für die Anbringung des Foliensensors 1 vorgesehen, dass dieser entweder auf das Gehäuse des Mobilteils 2 aufgeklebt oder dort in Schichten aufkaschiert ist. Dabei ist der Foliensensor 1 auf ihrer dem Gehäuse abgewandten Seite mit Dämpfungsmaterial 10 belegt, das beispielsweise von einem PU-Schaumstoff oder gummiartigem Material gebildet sein kann. Die Materialeigenschaft dieses Dämpfungsmaterials 10 beeinflusst die Schaltkraft, ist also entsprechend der geforderten Empfindlichkeit auszuwählen. Gleiches gilt für die Dicke des Dämpfungsmaterials 10, das ebenfalls entsprechend der geforderten taktilen Empfindlichkeit des Foliensensors 1 zu wählen ist. Entsprechend ist auch die Elastizität bzw. die Härte des Dämpfungsmaterials 10 gemäß der geforderten Schaltempfindlichkeit auszuwählen. Schließlich hat auch die Folienstärke des Foliensensors 1 Einfluss auf die Schaltempfindlichkeit.

Schließlich kann in in der Zeichnung nicht mehr dargestellter Weise die Außenfläche des Dämpfungsmaterials 10 mit einer gleitfähigen Beschichtung versehen sein, um einerseits beim Kontakt mit Möbelstücken oder dergleichen keine Beschädigungen hervorzurufen und andererseits es zu ermöglichen, dass sich das Mobilteil 2 reibungsfrei an Hindernissen entlang bewegen kann. Hierbei kann die gleitfähige Beschichtung von einer dünnen Lage textilen Gewebes oder auch von einer lackartigen Oberflächenschicht gebildet sein.

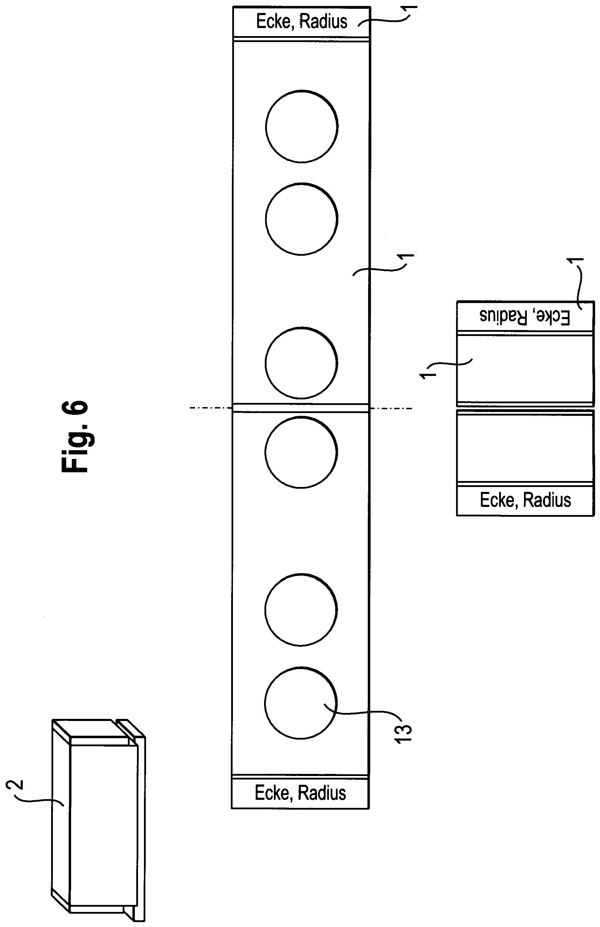

Die Fig. 6 zeigt hierzu ein schematisch wiedergegebenes Ausführungsbeispiel, wobei ergänzend für die Navigation an den Seitenflächen Ultraschallsensoren 13 vorgesehen sind.

## Patentansprüche

1. Autonom arbeitendes Mobilteil (2) umfassend eine Oberfläche und einen daran angebrachten drucksensiblen Sensor (1) zur Erkennung von Hindernissen, wobei der Sensor (1) ein Foliensensor (1) ist und zwei gegenseitig auf Abstand gehaltene, elektrisch leitende Folien (5) enthält, die unter Druck zur gegenseitigen Anlage gebracht werden können und damit eine elektrische Schaltfunktion auslösen, wodurch das Auftreffen an einem Hindernis signalisiert und von einer Auswerteschaltung weiterverarbeitet werden kann,
**dadurch gekennzeichnet, dass** zwischen den Folien (5) lokal angeordnete Abstandshalter (6) vorgesehen sind, deren den Folienabstand bestimmende Höhe, gegenseitiger Abstand (7) und Fläche sowie Randkontur der geforderten Ansprechempfindlichkeit angepasst ist.

2. Autonom arbeitendes Mobilteil (2) nach Anspruch 1, **dadurch gekennzeichnet, dass** durch geeignete Anordnung der Abstandshalter (6) Schaltflächen unterschiedlicher Größe gebildet werden.

3. Autonom arbeitendes Mobilteil (2) nach einem der Ansprüche 1 oder 2, **dadurch gekennzeichnet, dass** die Folien (5) zur Anbringung an verrundeten Kanten bogenförmig ausgebildet sind, wobei die Folien (5) zur Wahrung des erforderlichen gegenseitigen Abstands entweder in einzelnen Schichten auf die Oberfläche des Mobilteils aufkaschiert sind oder mit ausreichend hohen und benachbart angeordneten Abstandshaltern (6) versehen oder entsprechend der zu bekleidenden Verrundung vorgeformt oder geprägt sind.

4. Autonom arbeitendes Mobilteil (2) nach einem der Ansprüche 1 bis 3, **dadurch gekennzeichnet, dass** der Foliensensor (1) derart an der Oberfläche des Mobilteils (2) angeordnet ist, dass er zumindest im Bereich eines Randstreifens (9) bei Krafteinwirkung unter Kontaktgabe biegbar ist.

5. Autonom arbeitendes Mobilteil (2) nach Anspruch 4, **dadurch gekennzeichnet, dass** im Bereich des Randstreifens (9) Mittel zur Rückstellung in die Ausgangslage nach einem Biegen vorgesehen sind.

6. Autonom arbeitendes Mobilteil (2) nach Anspruch 5, **dadurch gekennzeichnet, dass** die Mittel zur Rückstellung von Dämpfungsmaterial (10) gebildet sind.

7. Autonom arbeitendes Mobilteil (2) nach Anspruch 6 **dadurch gekennzeichnet, dass** zur Bildung eines Unterfahrschutzes das Dämpfungsmaterial (10) zumindest teilweise oben über das Gehäuse des Mobilteils (2) übersteht.

8. Autonom arbeitendes Mobilteil (2) nach einem der Ansprüche 1 bis 3, **dadurch gekennzeichnet, dass** es im Randbereich des Foliensensors (1) mit einer Schaltwippe (11) versehen ist, die eine am Rand des Foliensensors (1) auftretende Kraftwirkung in einen von seinem Rand beabstandeten Bereich überträgt.

9. Autonom arbeitendes Mobilteil (2) nach Anspruch 8 9, **dadurch gekennzeichnet, dass** die Schaltwippe (11) gelenkig gelagert ist und zwischen der Schaltwippe (11) und dem Foliensensor (1) ein im taktilen Bereich vorgesehenes Distanzstück (12) angeordnet ist.

10. Autonom arbeitendes Mobilteil (2) nach Anspruch 9, **dadurch gekennzeichnet, dass** das Distanzstück (12) fest an der Schaltwippe (11) angeordnet ist.

11. Autonom arbeitendes Mobilteil (2) nach einem der Ansprüche 8 bis 10, **dadurch gekennzeichnet, dass** die Schaltwippe (11) als winkelförmige, die Kante oder Ecke des Mobilteils (2) umgreifende Kappe ausgebildet ist, wobei beide Schenkel des Winkels mit einem Distanzstück versehen sind.

12. Autonom arbeitendes Mobilteil (2) nach einem der Ansprüche 1 bis 11, **dadurch gekennzeichnet, dass** mindestens eine der Folien (5) mit einer potentiometrisch wirkenden Oberfläche ausgestattet sind und bei Kontaktgabe der zwischen den Folien (5) auftretende elektrische Widerstand ermittelt wird.

13. Autonom arbeitendes Mobilteil (2) nach einem der Ansprüche 1 bis 12, **dadurch gekennzeichnet, dass** die Ränder der Folien (5) sowie die Anschlussleitungen gegen Feuchtigkeitseintritt abgedichtet sind.

14. Autonom arbeitendes Mobilteil (2) nach Anspruch 13, **dadurch gekennzeichnet, dass** die Abdichtung durch eine Verklebung erfolgt.

15. Autonom arbeitendes Mobilteil (2) nach Anspruch 13, **dadurch gekennzeichnet, dass** das Dämpfungsmaterial (10) den Rand des Foliensensors (1) umschließt.

16. Autonom arbeitendes Mobilteil (2) nach Anspruch 15, **dadurch gekennzeichnet, dass** das Dämpfungsmaterial (10) gegen das Gehäuse des Mobilteils (2) verklebt ist.

17. Autonom arbeitendes Mobilteil (2) nach einem der Ansprüche 1 bis 13, **dadurch gekennzeichnet, dass** der Foliensensor (5) gemeinsam mit dem Gehäuse umschäumt ist.

18. Autonom arbeitendes Mobilteil (2) nach einem der Ansprüche 1 bis 17, **dadurch gekennzeichnet, dass** der Foliensensor (5) auf das Gehäuse des Mobilteils (2) aufgeklebt oder in Schichten aufkaschiert ist.

19. Autonom arbeitendes Mobilteil (2) nach einem der Ansprüche 1 bis 18, **dadurch gekennzeichnet, dass** der Foliensensor (1) auf seiner dem Gehäuse abgewandten Seite mit Dämpfungsmaterial (10) belegt ist.

20. Autonom arbeitendes Mobilteil (2) nach Anspruch 19, **dadurch gekennzeichnet, dass** das Dämpfungsmaterial (10) von einem PU-Schaumstoff oder gummiartigem Material gebildet ist.

21. Autonom arbeitendes Mobilteil (2) nach einem der Ansprüche 18 und 19, **dadurch gekennzeichnet, dass** die Dicke des Dämpfungsmaterials (10) der geforderten taktilen Empfindlichkeit des Foliensensors (1) entsprechend gewählt ist.

22. Autonom arbeitendes Mobilteil (2) nach einem der Ansprüche 19 bis 21, **dadurch gekennzeichnet, dass** die Elastizität bzw. Härte des Dämpfungsmaterials (10) der geforderten taktilen Empfindlichkeit des Foliensensors (1) entsprechend gewählt ist.

23. Autonom arbeitendes Mobilteil (2) nach einem der Ansprüche 1 bis 22, **dadurch gekennzeichnet, dass** die Folienstärke der geforderten taktilen Empfindlichkeit des Foliensensors (1) entsprechend gewählt ist.

24. Autonom arbeitendes Mobilteil (2) nach einem der Ansprüche 19 bis 23, **dadurch gekennzeichnet, dass** die Außenfläche des Dämpfungsmaterials (10) mit einer gleitfähigen Beschichtung versehen ist.

25. Autonom arbeitendes Mobilteil (2) nach Anspruch 24, **dadurch gekennzeichnet, dass** die gleitfähige Beschichtung von einer dünnen Lage textilen Gewebes oder einer lackartigen Oberflächenschicht gebildet ist.

## Claims

1. Autonomously operating mobile part (2) comprising a surface and a pressure-sensitive sensor (1) mounted thereon for identifying obstacles, wherein the sensor (1) is a film sensor (1) and contains two electrically conducting films (5) which are held mutually at a distance and under pressure can come to rest against one another and thus trigger an electrical switching function, as a result of which the impact with an obstacle is signalled and can be further processed by an evaluation circuit,
**characterised in that** provision is made for spacers (6) arranged locally between the films (5), of which the height which determines the film distance, the mutual distance (7) and area as well as edge contour are adjusted to the required response sensitivity.

2. Autonomously operating mobile part (2) according to claim 1, **characterised in that** push buttons of varying sizes are formed by suitably arranging the spacers (6).

3. Autonomously operating mobile part (2) according to one of claims 1 or 2, **characterised in that** the films (5) are embodied to be arched for attachment to rounded edges, wherein in order to ensure the required mutual distance the films (5) are either laminated in individual layers on the surface of the mobile part or are provided with sufficiently high spacers (6) which are arranged adjacent to another or are premoulded or embossed in accordance with the rounded edge to be lined.

4. Autonomously operating mobile part (2) according to one of claims 1 to 3, **characterised in that** the film sensor (1) is arranged on the surface of the mobile part (2) such that on contact and with force effect it can be bent at least in the region of an edge strip (9).

5. Autonomously operating mobile part (2) according to claim 4, **characterised in that** in the region of the edge strip (9) means for resetting to the initial position are provided after a bending.

6. Autonomously operating mobile part (2) according to claim 5, **characterised in that** the means for resetting damping material (10) are formed.

7. Autonomously operating mobile part (2) according to claim 6, **characterised in that** in order to form an underride guard, the damping material (10) projects at least partially beyond the top of the housing of the mobile part (2).

8. Autonomously operating mobile part (2) according to one of claims 1 to 3, **characterised in that** in the edge region of the film sensor (1) it is provided with a rocker switch (11) which transmits a force effect produced at the edge of the film sensor (1) into a region which is at a distance from its edge.

9. Autonomously operating mobile part (2) according to claim 8, **characterised in that** the rocker switch (11) is supported in an articulated manner and a spacer block (12) provided in the tactile region is arranged between the rocker switch (11) and the film sensor (1) .

10. Autonomously operating mobile part (2) according to claim 9, **characterised in that** the spacer block (12) is arranged fixedly on the rocker switch (11).

11. Autonomously operating mobile part (2) according to one of claims 8 to 10, **characterised in that** the rocker switch (11) is embodied as an angular cap which encloses the edge or corner of the mobile part (2), wherein both sides of the angle are provided with a spacer block.

12. Autonomously operating mobile part (2) according to one of claims 1 to 11, **characterised in that** at least one of the films (5) is equipped with a potentiometrically functioning surface and upon contact the electrical resistance produced between the films (5) is determined.

13. Autonomously operating mobile part (2) according to one of claims 1 to 12, **characterised in that** the edges of the films (5) and the connecting lines are sealed against moisture ingress.

14. Autonomously operating mobile part (2) according to claim 13, **characterised in that** the seal is carried out by means of an adhesive.

15. Autonomously operating mobile part (2) according to claim 13, **characterised in that** the damping material (10) encloses the edge of the film sensor (1).

16. Autonomously operating mobile part (2) according to claim 15, **characterised in that** the damping material (10) is glued to the housing of the mobile part (2).

17. Autonomously operating mobile part (2) according to one of claims 1 to 13, **characterised in that** the film sensor (5) is mutually encased in foam with the housing.

18. Autonomously operating mobile part (2) according to one of claims 1 to 17, **characterised in that** the film sensor (5) is glued onto the housing of the mobile part (2) or laminated in layers.

19. Autonomously operating mobile part (2) according to one of claims 1 to 18, **characterised in that** on its side facing away from the housing the film sensor (1) is covered with damping material (10).

20. Autonomously operating mobile part (2) according to claim 19, **characterised in that** the damping material (10) is formed of a PU foam or rubber-type material.

21. Autonomously operating mobile part (2) according to one of claims 18 to 19, **characterised in that** the thickness of the damping material (10) is selected according to the required tactile sensitivity of the film sensor (1).

22. Autonomously operating mobile part (2) according to one of claims 19 to 21, **characterised in that** the elasticity or hardness of the damping material (10) is selected according to the required tactile sensitivity of the film sensor (1).

23. Autonomously operating mobile part (2) according to one of claims 1 to 22, **characterised in that** the film strength of the required tactile sensitivity of the film sensor (1) is selected accordingly.

24. Autonomously operating mobile part (2) according to one of claims 19 to 23, **characterised in that** the outer surface of the damping material (10) is provided with a low-friction coating.

25. Autonomously operating mobile part (2) according to claim 24, **characterised in that** the low-friction coating is formed of a thin layer of textile fabric or a lacquer-type surface layer.

## Revendications

1. Élément mobile à fonctionnement autonome (2) englobant une surface et un capteur sensible à la pression (1) y apposé pour la détection d'obstacles, dans lequel le capteur (1) est un capteur à films (1) et contient deux films (5) conducteurs d'électricité mutuellement maintenus à distance, qui peuvent être mis sous pression en vue d'une butée mutuelle et déclenchent ce faisant une fonction de commutation électrique, ce qui permet de signaler la rencontre d'un obstacle ainsi que le traitement par un circuit d'analyse, **caractérisé en ce que** des écarteurs (6) disposés localement entre les films (5) sont prévus, dont la hauteur déterminant l'écartement par rapport au film, l'écartement mutuel (7) et la surface ainsi que le contour de bordure est adapté à la sensibilité de réponse requise.

2. Élément mobile à fonctionnement autonome (2) selon la revendication 1, **caractérisé en ce que** des surfaces de commande de tailles différentes sont constituées via une disposition appropriée des écarteurs (6).

3. Élément mobile à fonctionnement autonome (2) selon l'une des revendications 1 ou 2, **caractérisé en ce que** les films (5) à apposer sur les bords arrondis sont exécutés en forme d'arc, dans lequel les films (5) pour la préservation de l'écartement mutuel nécessaire sont soit appliqués en couches individuelles sur la surface de l'élément mobile soit dotés d'écarteurs (6) suffisamment hauts et disposés dans le voisinage l'une de l'autre ou préformés ou empreints selon l'arrondi à revêtir.

4. Élément mobile à fonctionnement autonome (2) selon l'une des revendications 1 à 3, **caractérisé en ce que** le capteur à films (1) est disposé de telle manière sur la surface de l'élément mobile (2) qu'il est pliable avec établissement de contact au moins dans la zone d'une bande de bordure (9) sous l'action d'une force.

5. Élément mobile à fonctionnement autonome (2) selon la revendication 4, **caractérisé en ce que** dans la zone de la bande de bordure (9) sont prévus des moyens de retour à la situation initiale après un pliage.

6. Élément mobile à fonctionnement autonome (2) selon la revendication 5, **caractérisé en ce que** les moyens de retour sont constitués par un matériau amortissant (10).

7. Élément mobile à fonctionnement autonome (2) selon la revendication 6, **caractérisé en ce que** pour la constitution d'une protection anti-encastrement, le matériau amortissant (10) dépasse au moins en partie le dessus de la carcasse de l'élément mobile (2).

8. Élément mobile à fonctionnement autonome (2) selon l'une des revendications 1 à 3, **caractérisé en ce qu'**il est doté d'un levier (11) dans la zone de bordure du capteur à films (1), lequel levier transmet l'effet d'une force survenant au bord du capteur à films (1) dans une zone écartée de son bord.

9. Élément mobile à fonctionnement autonome (2) selon la revendication 8, **caractérisé en ce que** le levier (11) est logé de façon articulée et un élément d'espacement (12) disposé dans la zone tactile est prévu entre le levier (11) et le capteur à films (1).

10. Élément mobile à fonctionnement autonome (2) selon la revendication 9, **caractérisé en ce que** l'élément d'espacement (12) est disposé fixement sur le levier (11).

11. Élément mobile à fonctionnement autonome (2) selon l'une des revendications 8 à 10, **caractérisé en ce que** le levier (11) est exécuté sous la forme d'un capuchon à angles englobant les bords ou angles de l'élément mobile (2), dans lequel les deux côtés de l'angle sont dotés d'un élément d'espacement.

12. Élément mobile à fonctionnement autonome (2) selon l'une des revendications 1 à 11, **caractérisé en ce qu'**au moins un des films (5) est équipé d'une surface à effet potentiométrique et la résistance électrique survenant entre les films (5) est déterminée lors de l'établissement de contact.

13. Élément mobile à fonctionnement autonome (2) selon l'une des revendications 1 à 12, **caractérisé en ce que** les bords des films (5) ainsi que les lignes sont étanchéifiées contre l'entrée d'humidité.

14. Élément mobile à fonctionnement autonome (2) selon la revendication 13, **caractérisé en ce que** l'étanchéification s'opère via un collage.

15. Élément mobile à fonctionnement autonome (2) selon la revendication 13, **caractérisé en ce que** le matériau amortissant (10) englobe le bord du capteur à films (1).

16. Élément mobile à fonctionnement autonome (2) selon la revendication 15, **caractérisé en ce que** le matériau amortissant (10) est collé contre la carcasse de l'élément mobile (2).

17. Élément mobile à fonctionnement autonome (2) selon l'une des revendications 1 à 13, **caractérisé en ce que** le capteur à films (5) est enrobé de mousse conjointement avec la carcasse.

18. Élément mobile à fonctionnement autonome (2) selon l'une des revendications 1 à 17, **caractérisé en ce que** le capteur à films (5) est collé ou appliqué en couches sur la carcasse de l'élément mobile (2).

19. Élément mobile à fonctionnement autonome (2) selon l'une des revendications 1 à 18, **caractérisé en ce que** le capteur à films (1) est pourvu de matériau amortissant (10) sur son côté éloigné de la carcasse.

20. Élément mobile à fonctionnement autonome (2) selon la revendication 19, **caractérisé en ce que** le matériau amortissant (10) est constitué par une mousse PU ou un matériau caoutchouteux.

21. Élément mobile à fonctionnement autonome (2) selon l'une des revendications 18 et 19, **caractérisé en ce que** l'épaisseur du matériau amortissant (10) est sélectionnée selon la sensibilité tactile du capteur à films (1) requise.

22. Élément mobile à fonctionnement autonome (2) selon l'une des revendications 19 à 21, **caractérisé en ce que** l'élasticité resp. la dureté du matériau amortissant (10) est sélectionnée selon la sensibilité tactile du capteur à films (1) requise.

23. Élément mobile à fonctionnement autonome (2) selon l'une des revendications 1 à 22, **caractérisé en ce que** l'épaisseur du film est sélectionnée selon la sensibilité tactile du capteur à films (1) requise.

24. Élément mobile à fonctionnement autonome (2) selon l'une des revendications 19 à 23, **caractérisé en ce que** la surface extérieure du matériau amortissant (10) est dotée d'un revêtement glissant.

25. Élément mobile à fonctionnement autonome (2) selon la revendication 24, **caractérisé en ce que** le revêtement glissant est constitué par une fine couche de tissu textile ou une couche de surface semblable à un vernis-laque.
